# EUROPÄISCHE PATENTSCHRIFT

(11) **EP 3 049 268 B1**
(45) Veröffentlichungstag und Bekanntmachung des Hinweises auf die Patenterteilung: **28.11.2018**
(21) Anmeldenummer: 14776819.6
(22) Anmeldetag: 24.09.2014
(51) Int. Cl.: B60K 6/12, B60K 6/46, B60W 30/18, B60W 20/10, E02F 9/20

(54) **ARBEITSMASCHINE, INSBESONDERE MULDENKIPPER ODER TRUCK, MIT ELEKTROANTRIEB**
WORKING MACHINE, IN PARTICULAR A DUMPER TRUCK OR TRUCK, HAVING AN ELECTRIC DRIVE
ENGIN DE TRAVAIL, EN PARTICULIER TOMBEREAU OU CAMION, ÉQUIPÉ D'UN ENTRAÎNEMENT ÉLECTRIQUE

(30) Priorität: 25.09.2013 DE 102013015986; 28.11.2013 DE 102013018067
(43) Veröffentlichungstag der Anmeldung: 03.08.2016
(73) Patentinhaber: Liebherr-Components Biberach GmbH, 88400 Biberach an der Riß (DE)
(72) Erfinder: CHRIST, Clemens, 88400 Biberach (DE); GRANER, Klaus, 88400 Biberach (DE)
(74) Vertreter: Thoma, Michael
(86) Internationale Anmeldenummer: PCT/EP2014/002593
(87) Internationale Veröffentlichungsnummer: WO 2015/043743

(56) Entgegenhaltungen:
- EP-A1- 1 770 852
- WO-A2-2008/072044
- DE-A1-102006 019 535
- DE-A1-102008 034 242
- JP-A- 2011 098 680

## Beschreibung

Die vorliegende Erfindung betrifft eine Arbeitsmaschine, insbesondere in Form eines Muldenkippers oder Truck, mit einem Fahrantriebs- und/oder Hauptarbeitsaggregat, das von einer Antriebsvorrichtung umfassend zumindest einen Elektromotor antreibbar ist. Die Erfindung betrifft ferner auch ein Verfahren zum Betreiben einer solchen Arbeitsmaschine.

Bei verschiedenen Arbeitsmaschinen wie bspw. selbstfahrenden Arbeitsmaschinen in Form von Muldenkippern, Trucks, Planierraupen oder ähnlichen Bau- bzw. Abbaufahrzeugen, oder Oberflächenfräsen wie Surface Minern, Asphaltfräsen oder Schneefräsen werden in jüngerer Zeit für den Fahrantrieb und/oder für das Hauptarbeitsaggregat gerne Elektromotoren verwendet, da solche Elektroantriebe gegenüber hydrostatischen Antrieben beachtliche Vorteile haben, so insbesondere einen besseren Wirkungsgrad und eine leichtere Wartung. Durch den beträchtlich besseren Wirkungsgrad und die hierdurch niedrigeren Betriebskosten können die höheren Anschaffungskosten von Elektromotoren recht schnell wieder kompensiert werden.

Die Größe des Elektromotors wird dabei zu einem großen Teil durch das Anfahrmoment bzw. das maximal benötigte Antriebsmoment bestimmt, womit das Anfahrmoment einen großen Einfluss auf die Kosten der Elektromaschine hat. Bspw. benötigt ein Muldenkipper oder Truck zum Anfahren auf schweren Böden oder an Hanglagen ein relativ hohes Anfahrmoment, das deutlich größer ist als das im normalen Fahrbetrieb benötigte Drehmoment. Planierraupen benötigen bspw. ein erhöhtes Antriebsmoment, wenn ein festsitzender Stein oder ein festgefrorener Erdklumpen wegzuschieben ist. Bei Arbeitsmaschinen wie den genannten Surface Minern oder Asphaltfräsen kann ebenfalls ein relativ hohes Anlaufmoment notwendig sein, bspw. um nach einem Festfrieren der Fräswalze diese ruckartig zu lösen.

Auch wenn diese Anfahr- bzw. Anlaufsituationen nur einen geringen Teil der gesamten Betriebszeit der jeweiligen Arbeitsmaschine ausmachen, ist doch die Antriebsvorrichtung hierauf auszulegen, um den Betriebsanforderungen gerecht zu werden.

Es wurde diesbezüglich bereits vorgeschlagen, vgl. DE 10 2010 014 644 A1, für den Anlaufvorgang der Fräswalze eines Surface Miners den Elektromotor beim Anlaufvorgang mit einem Frequenzumrichter zu betreiben, um beim Hochlauf den Einschaltstrom zu begrenzen und nach dem Hochlaufvorgang den Frequenzumrichter zu überbrücken, um die im Frequenzumrichter entstehenden Verluste und die mit dem Betrieb am Frequenzumrichter einhergehenden Reduzierung des Wirkungsgrads der Elektromotoren im hochgefahrenen Betrieb zu reduzieren. Eine solche Überbrückung des Frequenzumrichters ist jedoch schwierig, wenn im bestimmungsgemäßen Betrieb größere Drehzahlvariationen anfallen, wie dies Bspw. beim Fahrantrieb eines Trucks oder Muldenkippers der Fall ist.

Die US 7,950,481 schlägt eine Planierraupe mit Elektroantrieb vor, dessen Antriebsmoment kurzzeitig mittels Zuschalten einer Batterie, d.h. erhöhter Stromzufuhr erhöht werden kann, was aber wiederum einen ausreichend großen Elektromotor erfordert.

Aus der DE 10 2008 034 242 A1 ist ferner ein Flurförderzeug bekannt, das als Fahrantrieb einen Verbrennungsmotor aufweist, der über ein hydrostatisches Getriebe eine Antriebsachse antreibt, und zusätzlich einen Elektromotor besitzt, der zur Energierückgewinnung beim Bremsen vorgesehen ist und beim Beschleunigen der Arbeitsmaschine den Verbrennungsmotor unterstützen kann, wobei der genannte Elektromotor aus einer Batterie gespeist wird. Das Hydraulikgetriebe und der Verbrennungsmotor können durch eine Kupplung abgekuppelt werden, um rein elektrisch fahren zu können.

Der vorliegenden Erfindung liegt die Aufgabe zugrunde, eine verbesserte Arbeitsmaschine der eingangs genannten Art sowie ein verbessertes Verfahren zum Betreiben einer solchen Arbeitsmaschine bereitzustellen, die Nachteile des Standes der Technik vermeiden und letzteren in vorteilhafter Weise weiterbilden. Insbesondere soll das für das Anfahren benötigte, ggf. sehr hohe Anfahrmoment vom Antrieb bereitstellbar sein, ohne dies mit Wirkungsgradverlusten im Normalbetriebsbereich und überdimensionierten, teuren Elektromotoren bezahlen zu müssen.

Diese Aufgabe wird erfindungsgemäß durch eine Arbeitsmaschine gemäß Anspruch 1 sowie ein Verfahren zum Betreiben einer solchen Arbeitsmaschine gemäß Anspruch 13 gelöst. Bevorzugte Ausgestaltungen der Erfindung sind Gegenstand der abhängigen Ansprüche.

Es wird also vorgeschlagen, zusätzlich zum Elektroantrieb auch noch einen hydraulischen Antrieb vorzusehen, der den Elektromotor bei Bedarf unterstützen kann, um in besonderen Betriebssituationen wie bspw. dem Anfahren unter ungünstigen Bedingungen das benötigte, erhöhte Drehmoment bereitstellen zu können. Erfindungsgemäß umfasst die Antriebsvorrichtung zumindest einen den Elektromotor unterstützenden Hydraulikmotor. Durch den Hydraulikmotor kann ein zusätzliches Antriebsmoment bereitgestellt werden, was es erlaubt, den Elektromotor kleiner zu dimensionieren als dies der Fall wäre, wenn das gesamte Antriebsmoment des Fahrantriebs bzw. Hauptarbeitsaggregats vom Elektromotor alleine aufzubringen wäre.

Gemäß der Erfindung kann der Hydraulikmotor mittels einer Kupplung zugeschaltet und vom Antriebsstrang abgetrennt werden, so dass der Hydraulikmotor nur dann genutzt wird oder betrieben zu werden braucht, wenn tatsächlich das zusätzliche Drehmoment des Hydraulikmotors benötigt wird, insbesondere in Betriebssituationen, die das Anfahrmoment des Elektromotors übersteigen. Insbesondere braucht der Hydraulikmotor nicht mitgeschleppt zu werden, wenn das elektromotorische Antriebsmoment alleine ausreicht, so dass der Wirkungsgrad der Antriebsvorrichtung deutlich verbessert wird. Zum anderen kann die Antriebsvorrichtung mit höheren Drehzahlen betrieben werden, die der Hydraulikmotor regelmäßig nicht vertragen würde, von dem zumindest einen Elektromotor jedoch bestimmungsgemäß bereitgestellt werden.

Die genannte Kupplung, mittels derer der Hydraulikmotor an den Antriebsstrang angekuppelt und von diesem abgekuppelt werden kann, kann dabei als Klauenkupplung ausgebildet sein. Derartige Klauenkupplungen arbeiten in geöffnetem Zustand weitgehend verlustfrei, so dass im normalen Betrieb mit abgekuppeltem Hydraulikmotor keine Verluste an der bzw. Beeinträchtigungen des Wirkungsgrades durch die Kupplung entstehen. Alternativ zu einer solchen Klauenkupplung kann jedoch auch eine Lamellenkupplung Verwendung finden, mittels derer vorteilhafterweise der Hydraulikmotor auch bei Drehzahldifferenzen zwischen Elektromotor und Hydraulikmotor der Hydraulikmotor zugeschaltet werden kann.

In Weiterbildung der Erfindung können der zumindest eine Elektromotor und der Hydraulikmotor an einen gemeinsamen Antriebsstrang angebunden sein, der abtriebsseitig die Antriebsmomente von Elektromotor und Hydraulikmotor in den anzutreibenden Aggregatsteil leitet. In vorteilhafter Weiterbildung der Erfindung kann dabei der Hydraulikmotor in Serienschaltung an den Elektromotor angebunden sein, so dass bei geschlossener Kupplung das Antriebsmoment des Hydraulikmotors über den Elektromotor weiter zum abtriebsseitigen Ende des Antriebsstrangs geleitet wird. Insbesondere kann der Hydraulikmotor mittels der genannten Kupplung an den Elektromotor angebunden sein, wobei der Elektromotor einerseits über die Kupplung mit dem Hydraulikmotor verbindbar ist und andererseits mit dem Antriebsstrang verbunden ist, um das anzutreibende Element bzw. Aggregatsteil anzutreiben.

Generell wäre es indes auch möglich, den Hydraulikmotor und den Elektromotor in Parallelschaltung zueinander vorzusehen und die Antriebsmomente erst unmittelbar am anzutreibenden Aggregatsteil oder einem damit verbundenen Antriebsstrangteil zusammenzuführen, so dass das Antriebsmoment des Hydraulikmotors nicht über den Elektromotor geleitet wird. Die vorgenannte Ausbildung mit Anbindung des Hydraulikmotors an den Elektromotor besitzt jedoch Vorteile hinsichtlich einer einfachen Ausbildung des Antriebsstrangs und einer kompakten Anordnung.

Insbesondere können der Hydraulikmotor und der Elektromotor koaxial zueinander angeordnet sein, so dass ihre Antriebsachsen im Wesentlichen fluchtend zueinander ausgerichtet sind. Vorteilhafterweise kann der Elektromotor auf gegenüberliegenden Seiten zwei Wellenanschlussstümpfe umfassen, von denen einer mit dem anzutreibenden Element und der andere mit dem Hydraulikmotor verbindbar ist, ggf. jeweils unter Zwischenschaltung geeigneter Getriebe- bzw. Antriebselemente wie Kupplung, Getriebe, Über- oder Untersetzungsstufen und dergleichen.

In vorteilhafter Weiterbildung der Erfindung kann der genannte Antriebsstrang ein Getriebe umfassen, um die erreichbaren Antriebsdrehzahlen des Elektromotors und/oder des Hydraulikmotors mit der benötigten Drehzahl am anzutreibenden Antriebsaggregatsteil oder auch miteinander kompatibel zu machen. Gemäß einer vorteilhaften Weiterbildung der Erfindung kann das genannte Getriebe zwischen dem Elektromotor und dem abtriebsseitigen Ende des Antriebsstrangs vorgesehen sein. Die Verbindung des Hydraulikmotors mit dem Elektromotor kann getriebefrei ausgebildet sein, wobei natürlich in der vorgenannten Weise die Kupplung zum An- und Abkuppeln des Hydraulikmotors vorgesehen sein kann. In diesem Falle laufen der Hydraulikmotor und der Elektromotor bei geschlossener Kupplung mit derselben Drehzahl.

Alternativ oder zusätzlich zu der vorgenannten Ausbildung kann der Antriebsstrang jedoch auch ein Getriebe zwischen dem Hydraulikmotor und dem Elektroantrieb aufweisen. Hierdurch kann das zusätzliche Antriebsmoment des Hydraulikmotors über einen größeren Drehzahlbereich des Elektromotors zugeschaltet werden, so dass das zusätzliche Drehmoment des Hydraulikmotors über einen größeren Drehzahlbereich zur Verfügung gestellt werden kann.

Das Zuschalten des Hydraulikmotors kann grundsätzlich in verschiedener Art und Weise gesteuert werden, wobei es nach einer einfachen Ausbildung der Erfindung dabei in Betracht kommt, das Zuschalten und ggf. auch das Abschalten des Hydraulikmotors händisch zu steuern, bspw. durch Betätigung eines Stellelements, durch das die vorgenannte Kupplung geschlossen und geöffnet werden kann. Je nach Anfahrsituation kann der Maschinenführer wählen, ob der Hydraulikmotor zugeschaltet werden soll, bspw. dahingehend, dass bei normalem Anfahren auf festem, ebenen Untergrund oder nur begrenzter Zuladung eines Muldenkippers oder Trucks nur mit dem Elektromotor angefahren wird und der Hydraulikmotor abgekuppelt bleibt, während der Maschinenführer zum Anfahren an einer Steigung und/oder auf tiefem Untergrund bzw. mit hoher Beladung den Hydraulikmotor zuschalten kann.
Gemäß der Erfindung kann vorteilhafterweise jedoch eine automatische Steuerung der Zuschaltung und/oder Abschaltung des Hydraulikmotors vorgesehen sein, dergestalt, dass die Steuervorrichtung zum Zuschalten und/oder Abschalten des Hydraulikmotors die Geschwindigkeit der Antriebsvorrichtung und ggf. das benötigte Antriebsmoment berücksichtigt.
Dabei kann gemäß der Erfindung die Steuervorrichtung den Hydraulikmotor abschalten, sobald eine vorbestimmte Geschwindigkeit erreicht oder überschritten wird und beispielsweise auch dann, wenn das benötigte Antriebsmoment einen vorbestimmten Wert unterschreitet. Insbesondere kann die genannte Steuervorrichtung bei einer selbstfahrenden Arbeitsmaschine wie Muldenkipper oder Truck die Fahrgeschwindigkeit berücksichtigen und den Hydraulikmotor automatisch abkuppeln, wenn die Fahrgeschwindigkeit einen vorbestimmten Wert überschreitet. Wird die hydraulische Unterstützung des Elektroantriebs für das Antreiben eines Hauptarbeitsaggregats wie beispielsweise der Fräswalze eines Surface Miners, einer Schneefräse oder einer Asphaltfräse genutzt, kann die Steuervorrichtung den Hydraulikmotor abkoppeln, wenn die Fräswalze eine gewisse Drehzahl erreicht hat. Zusätzlich kann die Steuervorrichtung den Hydraulikmotor bei Unterschreiten eines vorbestimmten Antriebsmoments abschalten, das bspw. durch eine geeignete Sensorik überwacht werden kann, bspw. in Form eines Strommessers, der die Stromaufnahme des Elektromotors misst, oder einer anderen geeigneten Leistungsaufnahmesensorik, die die Leistungsaufnahme des Elektromotors bestimmen kann. Insbesondere kann mittels eines verwendeten Umrichters die Leistungsaufnahme berechnet werden.

In Weiterbildung der Erfindung kann die genannte Steuervorrichtung gegebenenfalls auch das Zuschalten des Hydraulikmotors steuern und hierfür wiederum die Geschwindigkeit der Antriebsvorrichtung und/oder das von dieser benötigte Antriebsmoment berücksichtigen, wobei insbesondere der Hydraulikmotor zugeschaltet werden kann, wenn die Antriebsgeschwindigkeit eine vorbestimmte Geschwindigkeit unterschreitet und/oder das benötigte Antriebsmoment einen vorbestimmten Wert überschreitet. Die Grenzwerte für die Antriebsgeschwindigkeit oder das benötigte Antriebsmoment, bei denen eine Zuschaltung des Hydraulikmotors erfolgt, müssen dabei nicht mit den zuvor genannten Grenzwerten für die Abschaltung des Hydraulikmotors übereinstimmen. Bspw. kann die Antriebsgeschwindigkeit, bei deren Unterschreiten eine Zuschaltung des Hydraulikmotors erfolgt, deutlich niedriger sein als die Fahrgeschwindigkeit, bei der der Hydraulikmotor abgeschaltet wird. Wird bspw. eine Klauenkupplung verwendet, kann die Steuervorrichtung den Hydraulikmotor erst dann zuschalten, wenn die Antriebsgeschwindigkeit null ist oder zumindest keine größere Drehzahldifferenz vorhanden ist. Wird das benötigte Antriebsmoment für das Zuschalten berücksichtigt, kann der Grenzwert für das Zuschalten höher sein als der Grenzwert für das Abschalten.

In vorteilhafter Weiterbildung der Erfindung bildet die genannte Antriebsvorrichtung den Fahrantrieb einer selbstfahrenden Arbeitsmaschine, wobei der von dem zumindest einen Elektromotor und dem zuschaltbaren Hydraulikmotor gemeinsam anzutreibende Antriebsteil ein Rad des Fahrwerks oder bei einem Kettenfahrwerk das Antriebsritzel des Kettenfahrwerks sein kann. Dabei können der zumindest eine Elektromotor und der damit verbindbare Hydraulikmotor im Sinne eines Einzelradantriebs ein einzelnes Rad antreiben oder im Sinne eines Achsantriebes die mehreren Räder einer Fahrwerksachse antreiben, ggf. über ein zwischengeschaltetes Differenzial. Je nach Ausbildung können der zumindest eine Elektroantrieb und der zuschaltbare Hydraulikmotor auch mehrere Achsen antreiben.

Die Verwendung eines solchen Antriebs umfassend zumindest einen Elektromotor und einen zuschaltbaren Hydraulikmotor kann insbesondere für den Fahrantrieb eines Muldenkippers oder eines Trucks von Vorteil sein, da hier regelmäßig im normalen Fahrbetrieb und damit über einen großen Anteil der Betriebszeit begrenzte Antriebsmomente benötigt werden und nur beim Anfahren und damit kleineren Betriebszeitteilen das Zuschalten des Hydraulikmotors benötigt wird.

In vorteilhafter Weiterbildung der Erfindung kann dabei vorgesehen sein, dass der zumindest eine Hydraulikmotor bei Bedarf von der Pumpe bzw. Druckquelle des Kippmechanismus der Kippmulde des Muldenkippers versorgbar ist. Der Kippmechanismus der Kippmulde wird üblicherweise nur im Stillstand des Muldenkippers betätigt, während er im Fahrbetrieb nicht benötigt wird. Insofern kann für das Anfahren des Muldenkippers die dann nicht benötigte Pumpe bzw. Druckquelle des Kippmechanismus dazu verwendet werden, den Hydraulikmotor des Fahrantriebes zu speisen. Hierzu kann der Hydraulikmotor über eine geeignete Verbindungsleitung, vorzugsweise unter Zwischenschaltung eines Ventils, an den Druckkreis des Kippmechanismus angebunden sein. Die Pumpe des hydraulischen Kippmechanismus kann vom vorgenannten Verbrennungsmotor angetrieben sein.

Alternativ zu einer solchen Ausbildung der Antriebsvorrichtung als Fahrantrieb kann der Abtrieb der Antriebsvorrichtung auch mit einer Seiltrommel verbunden sein, bspw. mit der Seiltrommel eines Krans oder eines anderen Hebezeugs, mittels derer ein Hubseil oder ein Abspannseil eines Krans verstellt werden kann.

In Weiterbildung der Erfindung kann der Elektromotor für das benötigte Anfahr- bzw. maximale Antriebsmoment der Arbeitsmaschine zu klein dimensioniert sein und optimal für den bereits angefahrenen Arbeits- bzw. Fahrbetrieb ausgelegt sein, insbesondere für den Betriebsbereich der am häufigsten genutzten Drehzahl und/oder des am häufigsten genutzten Drehmoments. Insbesondere kann der Elektromotor ein maximales Anfahrmoment und/oder maximales Antriebsmoment besitzen, das kleiner ist als das von dem Fahrantriebs- und/oder Hauptantriebsaggregat der Arbeitsmaschine bestimmungsgemäß benötigte maximale Anfahrmoment bzw. maximale Antriebsmoment, wobei andererseits der zumindest eine Elektromotor und der zuschaltbare Hydraulikmotor derart ausgelegt bzw. bemessen sind, dass die Summe der maximalen Anfahrmomente und/oder Antriebsmomente des Elektromotors und des Hydraulikmotors zumindest so groß ist wie das vorgenannte maximale Anfahrmoment bzw. Antriebsmoment, das der Fahrantrieb bzw. das Hauptantriebsaggregat der Arbeitsmaschine benötigt. Durch die Unterdimensionierung des Elektromotors kann nicht nur Gewicht eingespart werden, sondern es werden auch die Kosten der Elektromaschine reduziert.

Die vorliegende Erfindung wird nachstehend anhand eines bevorzugten Ausführungsbeispiels und zugehöriger Zeichnungen näher erläutert. In den Zeichnungen zeigen:
- Fig. 1:: eine schematische Seitenansicht einer selbstfahrenden Arbeitsmaschine in Form eines Muldenkippers nach einer vorteilhaften Ausführung der Erfindung, bei der der Fahrantrieb für zumindest ein antreibbares Rad einen Elektromotor und einen zuschaltbaren Hydraulikmotor umfasst,
- Fig. 2:: eine schematische Darstellung des Antriebsstrangs für ein Rad des Muldenkippers aus Fig. 1, wobei die Anbindung des zuschaltbaren Hydraulikmotors über eine Kupplung an den Elektromotors des Antriebsstrangs und die Verbindung der kuppelbaren Antriebsmotoren an das Rad über ein Getriebe gezeigt sind, und
- Fig. 3:: ein Zugkraft-Diagramm des Elektromotors und des zuschaltbaren Hydraulikmotors.

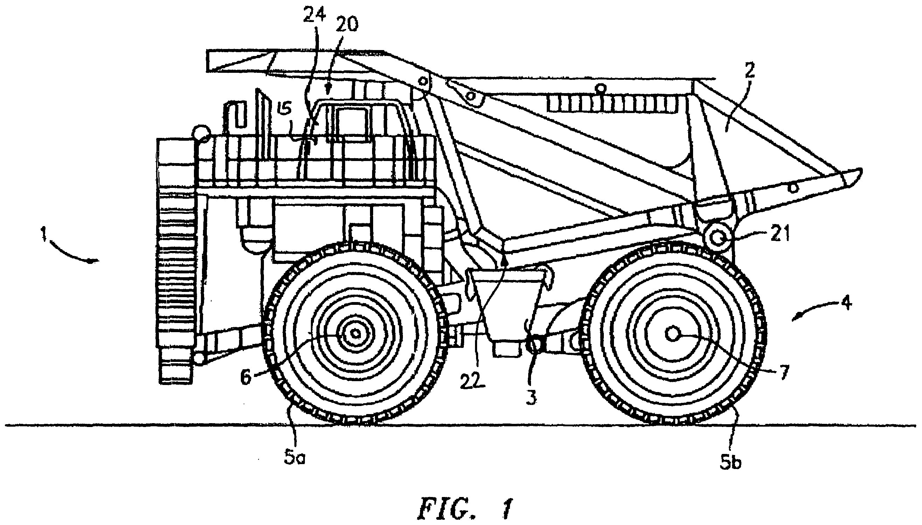

Wie Fig. 1 zeigt, kann die Arbeitsmaschine beispielsweise als Muldenkipper 1 ausgebildet sein, der eine auf einem Chassis 3 abgestützte Kippmulde 2 zum Transport von Schüttgut wie bspw. Abraum aus Minen, Erdreich aus Baustellen, Kies oder dergleichen umfasst. Die genannte Kippmulde 2 kann um eine liegende Kippachse 21 relativ zum Chassis 3 auf- und niedergewippt bzw. verkippt werden, um das in der Kippmulde 2 geladene Transportgut durch Aufwippen der Kippmulde 2 abladen zu können. Der zum Verkippen der Kippmulde 2 vorgesehene Kippmechanismus 22 kann einen nicht näher gezeigten Stellaktor bspw. in Form eines Hydraulikzylinders umfassen, der von einer Druckquelle bzw. Pumpe gespeist wird.

Wie Fig. 1 zeigt, kann der Muldenkipper 1 ein Fahrwerk 4 mit mehreren Fahrwerksachsen umfassen, an denen jeweils Räder 5 gelagert sind. Beispielsweise kann der Muldenkipper 1 eine Vorderachse 6 und eine Hinterachse 7 umfassen, an der jeweils Räder 5a und 5b vorgesehen sind.

Die Räder 5 des Fahrwerks 4 können über eine Antriebsvorrichtung 8 angetrieben werden, wobei die Antriebsvorrichtung 8 nur eine Fahrwerksachse oder auch mehrere Fahrwerksachsen, insbesondere sowohl die Vorderachse 6 als auch die Hinterachse 7 antreiben kann. Dabei kann für jedes Rad 5 ein Einzelradantrieb vorgesehen sein, bei dem für jedes Rad ein einzelner Elektromotor und ein Hydraulikmotor vorgesehen sind. Alternativ kann auch ein Achsantrieb vorgesehen sein, mittels dessen die Räder einer Achse oder auch mehrerer Achsen gemeinsam, ggf. über ein Differenzial, angetrieben werden können.

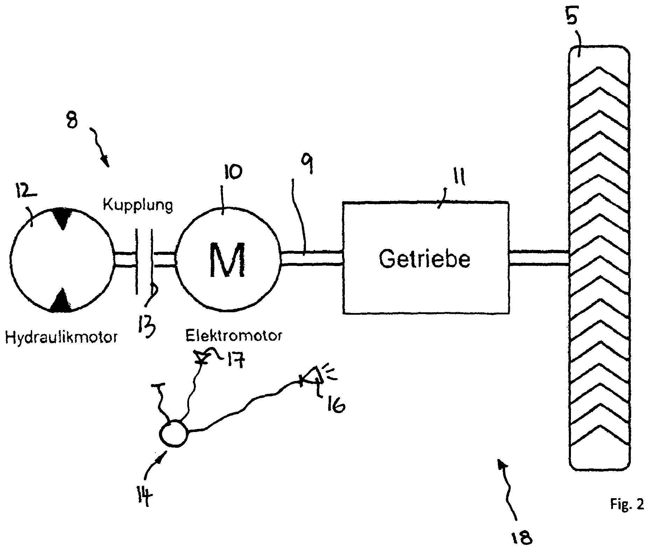

Wie Fig. 2 zeigt, kann der Antriebsstrang 9 der Antriebsvorrichtung 8 für ein Rad 5 einen Elektromotor 10 umfassen, der über ein Getriebe 11 mit dem genannten Rad 5 verbunden ist, so dass das Drehmoment des Antriebs des Elektromotors 10 auf das Rad 5 gegeben werden kann.

Ferner umfasst die Antriebsvorrichtung 8 einen Hydraulikmotor 12, der über eine Kupplung 13 an den genannten Antriebsstrang 9 angekuppelt und von diesem abgekuppelt werden kann. Wie Fig. 2 zeigt, kann der genannte Hydraulikmotor 12 über die Kupplung 13 unmittelbar an den Elektromotor 10 angebunden sein, so dass der Hydraulikmotor 12 und die Kupplung 13 in Serie geschaltet sind, d.h. das Drehmoment des Hydraulikmotors 12 bei geschlossener Kupplung 13 über den Elektromotor 10 zum Abtrieb des Antriebsstrangs 9 geleitet wird.

Die genannte Kupplung 13 kann eine Klauenkupplung oder auch eine Lamellenkupplung sein, wobei der Vorteil einer Klauenkupplung ist, dass sie im geöffneten Zustand verlustfrei arbeitet, während mit einer Lamellenkupplung auch bei rollendem Muldenkipper 1 der Hydraulikmotor 12 einfach zugeschaltet werden kann.

Das Zuschalten des Hydraulikmotors 12 kann dabei über eine Steuervorrichtung 14 gesteuert werden, die die Kupplung 13 ansteuern kann, um diese wahlweise zu schließen oder zu öffnen, wobei die Steuervorrichtung 14 mittels eines Steuer- bzw. Stellelements 15 im Führerstand 20 manuell aktiviert oder betätigt werden kann. Alternativ oder zusätzlich zu einem solchen manuellen Aktivieren kann die Steuervorrichtung 14 jedoch auch Steuermittel zum automatischen oder halbautomatischen Zuschalten oder Abschalten des Hydraulikmotors 12 umfassen und hierzu verschiedene Betriebsparameter des Muldenkippers 1 berücksichtigen, insbesondere die Fahrgeschwindigkeit bspw. in Form der Drehzahl des anzutreibenden Rades 5 und/oder der Drehzahl des Elektromotors 10, die über einen geeigneten Sensor 16 erfasst und an die Steuervorrichtung 14 gemeldet werden kann. Alternativ oder zusätzlich kann die Steuervorrichtung 14 beim Abschalten oder Zuschalten des Hydraulikmotors 12 das Antriebsmoment berücksichtigen, das vom Rad 5 benötigt wird, wobei hier bspw. die Leistungsaufnahme oder das Drehmoment des Elektromotors 10 über einen geeigneten Leistungsaufnahmesensor 17 oder einen Drehmomentsensor als Indikator erfasst werden und an die Steuervorrichtung 14 gemeldet werden kann.

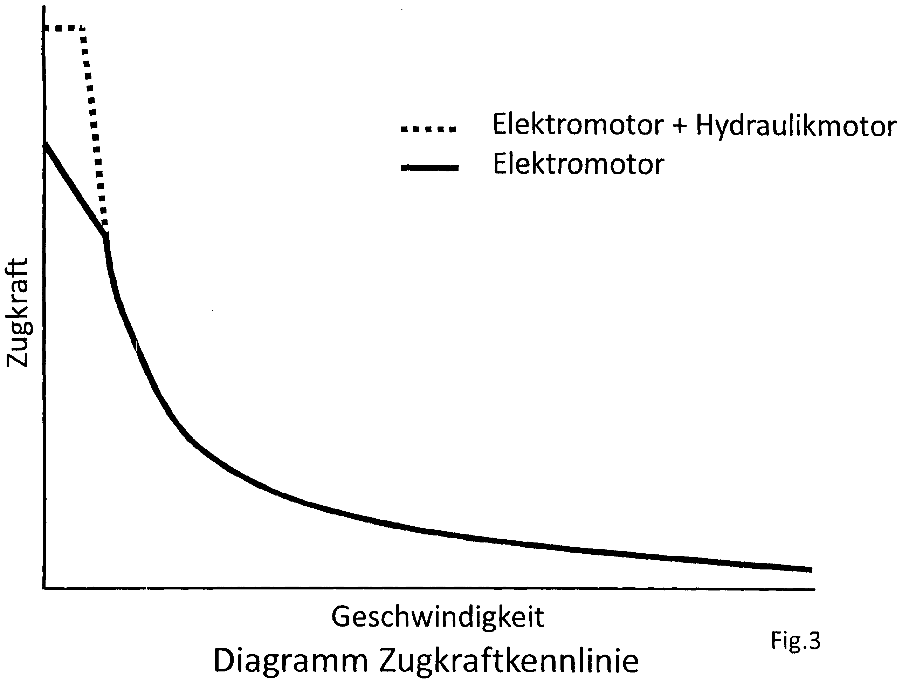

Üblicherweise wird das zusätzliche Antriebsmoment des Hydraulikmotors 12 nur beim Anfahren benötigt und dies auch nur wiederum dann, wenn ein außergewöhnlich hohes Anfahrmoment benötigt wird, bspw. wenn der Muldenkipper 1 bei schlechtem Untergrund am Hang in beladenem Zustand anfahren muss. Hierfür kann im Stillstand des Fahrzeugs der Hydraulikmotor 12 über die Kupplung 13 eingekuppelt werden. Dies kann bspw. durch einen Tastendruck des Fahrers in der Fahrerkabine 24 über die genannte Steuervorrichtung 14 ausgelöst werden, oder auch von der Steuervorrichtung 14 automatisch erledigt werden, wenn über die Sensoren 16 und 17 eine noch im Bereich von null liegende Fahrgeschwindigkeit erfasst und bestimmt wird, dass der Elektromotor 10 sein maximales Drehmoment erreicht, ohne dass das Fahrzeug anfährt.
Bei Erreichen einer vorbestimmten Geschwindigkeit, bspw. einer Geschwindigkeit von etwa 5 km/h, kann die Steuervorrichtung 14 den Hydraulikmotor 12 wieder abschalten, indem die Kupplung 13 gelöst wird, da ab dann das Antriebsmoment des Elektromotors 10 alleine ausreichend ist. Das Abschalten bzw. Abkuppeln des Hydraulikmotors (12) kann entweder während der Fahrt automatisch erfolgen oder durch den Maschinenführer manuell ausgelöst werden. Alternativ kann vorgesehen sein, dass das Fahrzeug zunächst auf einem besseren Untergrund zum Stillstand gebracht werden muss, auf dem das Fahrzeug dann ohne Unterstützung des Hydraulikmotors 12 wieder anfahren kann. Wenn das Fahrzeug steht, kann bspw. durch manuelles Betätigen des Steuerelements 15 in der Fahrerkabine 24 das Abkuppeln ausgelöst werden. Die Steuervorrichtung 14 kann dabei bspw. derart ausgebildet sein, dass unzulässig hohe Drehzahlen des Hydraulikmotors 12 durch entsprechende Ansteuerung des Elektromotors 10 und/oder des Hydraulikmotors 12 unterbunden werden, solange der Hydraulikmotor 12 an den Antriebsstrang 9 angekuppelt ist.
Wie Fig. 3 zeigt, kann der Hydraulikmotor 12 insbesondere in einem Bereich niedriger Geschwindigkeit zu dem Elektromotor 10 zugeschaltet werden und die Zugkraft des Elektromotors 10 über dessen maximale Drehmomentgrenze hinaus harmonisch erhöhen. In Fig. 3 zeigt dabei die durchgezogene Linie die Zugkraftkurve des Elektromotors 10 alleine, während die gestrichelte Linie die durch den Hydraulikmotor 12 ergänzte Zugkraftkurve zeigt, d.h. die Zugkraft, die durch Zusammenschalten des Elektromotors 10 und des Hydraulikmotors 12 erzeugbar ist. Wie Fig. 3 zeigt, kann das Zuschalten des Hydraulikmotors 12 bspw. in einem Geschwindigkeitsbereich der Antriebsvorrichtung 8 erfolgen, der bei der Geschwindigkeit null, d.h. im Anfahren beginnt und sich über weniger als 25%, ggf. auch weniger als 10% des gesamten, möglichen Geschwindigkeitsbereiches erstreckt.

Wird der Hydraulikmotor 12 benötigt und zugeschaltet, kann der Hydraulikmotor 12 vorteilhafterweise von der Pumpe gespeist werden, die den Kippmechanismus 22 der Kippmulde 2 speist und betätigt, da üblicherweise der Kippmechanismus 22 im Fahrbetrieb und damit auch schon beim Anfahren des Muldenkippers 1 nicht benötigt wird.

Mittels des gezeigten mechatronischen Systems können insbesondere folgende Vorteile beim Elektromotor 10 genutzt werden:
- Der Elektromotor 10 kann kleiner dimensioniert werden, da er ein geringeres maximales Moment haben kann. Hierdurch wird der Elektromotor 10 in den Kosten günstiger.
- Am Elektromotor 10 kann Gewicht eingespart werden.

## Patentansprüche

1. Arbeitsmaschine, insbesondere in Form eines Muldenkippers oder eines Trucks, mit einem Fahrantriebs- und/oder Hauptarbeitsaggregat (18), das von einer Antriebsvorrichtung (8) umfassend zumindest einen Elektromotor (10) und zumindest einen den Elektromotor (10) unterstützenden Hydraulikmotor (12) antreibbar ist, wobei der Hydraulikmotor (12) mittels einer Kupplung (13) an den Elektromotor (10) zuschaltbar und vom Elektromotor (10) abkuppelbar ist, **dadurch gekennzeichnet, dass** eine Steuervorrichtung (14) zum Steuern des Zu-und Abkuppelns des Hydraulikmotors (12) in Abhängigkeit der Fahrgeschwindigkeit und/oder der Drehzahl des Hauptarbeitsaggregats und/oder des benötigten Antriebsmoments des Fahrantriebs- und/oder Hauptantriebsaggregats vorgesehen ist, wobei die Steuervorrichtung (14) Steuermittel (14a) zum automatischen Abkuppeln des Hydraulikmotors (12) bei Überschreiten einer vorbestimmten Fahrgeschwindigkeit oder Drehzahl des Hauptarbeitsaggregats aufweist.

2. Arbeitsmaschine nach dem vorhergehenden Anspruch, wobei die Kupplung (13) als Klauen- oder Lamellenkupplung ausgebildet ist.

3. Arbeitsmaschine nach einem der vorhergehenden Ansprüche, wobei der Elektromotor (10) und der Hydraulikmotor (12) an einen gemeinsamen Antriebsstrang (9) angebunden sind, der abtriebsseitig mit dem anzutreibenden Element (5) des Fahrantriebs- und/oder Hauptarbeitsaggregats (18) verbunden ist.

4. Arbeitsmaschine nach dem vorhergehenden Anspruch, wobei der gemeinsame Antriebsstrang (9) einen Rad- oder Kettenfahrwerk-Antrieb des Fahrantriebs der Arbeitsmaschine bildet.

5. Arbeitsmaschine nach einem der vorhergehenden Ansprüche, wobei der Hydraulikmotor (12) koaxial zu dem Elektromotor (10) angeordnet ist.

6. Arbeitsmaschine nach einem der vorhergehenden Ansprüche, wobei der Elektromotor (10) zwischen dem Hydraulikmotor (12) und dem von der Antriebsvorrichtung (8) anzutreibenden Element (5) des Fahrantriebs- und/oder Hauptarbeitsaggregats (18) angeordnet ist und/oder das Drehmoment des Hydraulikmotors (12) über den Elektromotor (10) auf das anzutreibende Element (5) des Fahrantriebs- und/oder Hauptarbeitsaggregats (18) gebbar ist.

7. Arbeitsmaschine nach einem der beiden vorhergehenden Ansprüche, wobei zwischen dem Hydraulikmotor (12) und dem Elektromotor (10) ein Getriebe vorgesehen ist.

8. Arbeitsmaschine nach einem der vorhergehenden Ansprüche, wobei zwischen dem Elektromotor (10) und dem von dem Antriebsstrang (9) anzutreibenden Element (5) ein Getriebe (11) vorgesehen ist.

9. Arbeitsmaschine nach einem der vorhergehenden Ansprüche, wobei der Elektromotor (10) ein maximales Anfahrmoment und/oder maximales Antriebsmoment besitzt, das kleiner ist als das von der Antriebsvorrichtung (8) benötigte maximale Anfahrmoment und/oder benötigte maximale Antriebsmoment, wobei die Summe der maximalen Anfahrmomente und/oder Antriebsmomente des Elektromotors (10) und des zugeschalteten Hydraulikmotors (12) zumindest gleich groß ist wie das genannte benötigte maximale Anfahrmoment und/oder Antriebsmoment der Antriebsvorrichtung (8).

10. Arbeitsmaschine nach einem der vorhergehenden Ansprüche, wobei die Arbeitsmaschine als Muldenkipper (1) ausgebildet ist und die Antriebsvorrichtung (8) als Radantrieb zum Antreiben zumindest eines Rades (5) des Fahrwerks (4) des Muldenkippers (1) ausgebildet ist.

11. Arbeitsmaschine nach dem vorhergehenden Anspruch, wobei der Hydraulikmotor (12) von einer Pumpe eines Kippmechanismus (22) zum Aufkippen einer Kippmulde (2) des Muldenkippers (1) versorgbar ist.

12. Arbeitsmaschine nach einem der vorhergehenden Ansprüche 1 bis 9, wobei das Hauptarbeitsaggregat als Seiltrommelantrieb ausgebildet ist, wobei die Arbeitsmaschine vorzugsweise in Form eines Krans oder Hebezeugs ausgebildet ist und die Seiltrommel zum Verstellen eines Hubseils oder eines Abspannseils vorgesehen ist.

13. Verfahren zum Betreiben einer Arbeitsmaschine, die eine Antriebsvorrichtung (8) mit zumindest einem Elektromotor (10) und zumindest einem den Elektromotor (10) unterstützenden Hydraulikmotor (12) zum Antreiben eines Fahrantriebs- und/oder Arbeitsaggregats (18) aufweist, wobei der Hydraulikmotor (12) mittels einer Kupplung (13) an den Elektromotor (10) zuschaltbar und vom Elektromotor (10 abkuppelbar ist, **dadurch gekennzeichnet dass** der Hydraulikmotor (12) zum Anfahren des Fahrantriebs - und/oder Arbeitsaggregats zugeschaltet und bei Überschreiten einer vorbestimmten Fahrgeschwindigkeit oder einer Drehzahl des Arbeitsaggregats durch eine Steuervorrichtung (14) automatisch abgekuppelt wird.

## Claims

1. A work machine, in particular in the form of a dump truck or of a truck, having a traction drive unit and/or a main work unit (18) which can be driven via a drive apparatus (8) comprising at least one electric motor (10) and at least one hydraulic motor (12) supporting the electric motor (10), wherein the hydraulic motor (12) can be connected to the electric motor (10) and decoupled from the electric motor (10) by means of a clutch (13), **characterized in that** a control apparatus (14) is provided for controlling the coupling and decoupling of the hydraulic motor (12) in dependence on the travel speed and/or on the rotational speed of the main work unit and/or on the required drive torque of the traction drive unit and/or main drive unit, with the control apparatus (14) having control means (14a) for the automatic decoupling of the hydraulic motor (12) on an exceeding of a predefined travel speed or rotational speed of the main work unit.

2. A work machine in accordance with the preceding claim, wherein the clutch (13) is configured as a dog clutch or as a multi-disk clutch.

3. A work machine in accordance with one of the preceding claims, wherein the electric motor (10) and the hydraulic motor (12) are connected to a common drive train (9) which is connected at the output side to the element (5) of the traction drive unit and/or main work unit (18) to be driven.

4. A work machine in accordance with the preceding claim, wherein the common drive train (9) forms a wheel chassis drive or tracked chassis drive of the traction drive of the work machine.

5. A work machine in accordance with one of the preceding claims, wherein the hydraulic motor (12) is arranged coaxially to the electric motor (10).

6. A work machine in accordance with one of the preceding claims, wherein the electric motor (10) is arranged between the hydraulic motor (12) and the element (5) of the traction drive unit and/or main work unit (18) to be driven by the drive apparatus (8); and/or wherein the torque of the hydraulic motor (12) can be transferred via the electric motor (10) to the element (5) of the traction drive unit and/or main work unit (18) to be driven.

7. A work machine in accordance with one of the two preceding claims, wherein a transmission is provided between the hydraulic motor (12) and the electric motor (10).

8. A work machine in accordance with one of the preceding claims, wherein a transmission (11) is provided between the electric motor (10) and the element (5) to be driven by the drive train (9).

9. A work machine in accordance with one of the preceding claims, wherein the electric motor (10) has a maximum starting torque and/or a maximum drive torque which is smaller than the maximum starting torque required by the drive apparatus (8) and/or the required maximum drive torque, wherein the sum of the maximum starting torques and/or drive torques of the electric motor (10) and of the switched in hydraulic motor (12) is at least equally as large as the named required maximum starting torque and/or drive torque of the drive apparatus (8).

10. A work machine in accordance with one of the preceding claims, wherein the work machine is configured as a dump truck (1) and the drive apparatus (8) is configured as a wheel drive for driving at least one wheel (5) of the chassis (4) of the dump truck (1).

11. A work machine in accordance with the preceding claim, wherein the hydraulic motor (12) can be supplied by a pump of a tilting mechanism (22) for tilting up a dump body (2) of the dump truck (1).

12. A work machine in accordance with one of the preceding claims 1 to 9, wherein the main work unit is configured as a hoisting drum drive, wherein the work machine is preferably configured in the form of a crane or of a piece of lifting gear and the hoisting drum is provided for adjusting a hoist rope or a guying rope.

13. A method of operating a work machine which has a drive apparatus (8) having at least one electric motor (10) and at least one hydraulic motor (12) supporting the electric motor (10) for driving a traction drive unit and/or work unit (18), wherein the hydraulic motor (12) can be connected to the electric motor (10) and can be decoupled from the electric motor (10) by means of a clutch (13), **characterized in that** the hydraulic motor (12) is connected for starting the traction drive unit and/or work unit and is automatically decoupled by a control apparatus (14) on an exceeding of a predefined travel speed or of a rotational speed of the work unit.

## Revendications

1. Engin de travail, en particulier sous la forme d'un tombereau ou d'un camion, équipé d'un ensemble de mécanisme de transmission et/ou de travail principal (18), qui peut être entraîné par un dispositif d'entraînement (8) comprenant au moins un moteur électrique (10) et au moins un moteur hydraulique (12) d'assistance au moteur électrique (10), le moteur hydraulique (12) pouvant être raccordé au moteur électrique (10) et découplé du moteur électrique (10) au moyen d'un accouplement (13), **caractérisé en ce qu'**un dispositif de commande (14) est prévu pour la commande du couplage et découplage du moteur hydraulique (12) en fonction de la vitesse de déplacement et/ou de la vitesse de rotation de l'ensemble de travail principal et/ou du couple d'entraînement requis de l'ensemble de mécanisme de transmission et/ou d'entraînement principal, le dispositif de commande (14) comportant des moyens de commande (14a) destinés à découpler automatiquement le moteur hydraulique (12) lors du dépassement d'une vitesse de déplacement ou d'une vitesse de rotation prédéfinie de l'ensemble de travail principal.

2. Engin de travail selon la revendication précédente, dans lequel l'accouplement (13) est réalisé sous la forme d'un accouplement à griffes ou d'un embrayage à disques multiples.

3. Engin de travail selon l'une des revendications précédentes, dans lequel le moteur électrique (10) et le moteur hydraulique (12) sont raccordés sur un train d'entraînement (9) commun, qui est relié côté sortie à l'élément (5) à entraîner de l'ensemble de mécanisme de transmission et/ou de travail principal (18).

4. Engin de travail selon la revendication précédente, dans lequel le train d'entraînement (9) commun forme un entraînement de roue ou de train de chenille du mécanisme de transmission de l'engin de travail.

5. Engin de travail selon l'une des revendications précédentes, dans lequel le moteur hydraulique (12) est disposé de manière coaxiale par rapport au moteur électrique (10).

6. Engin de travail selon l'une des revendications précédentes, dans lequel le moteur électrique (10) est disposé entre le moteur hydraulique (12) et l'élément (5) de l'ensemble de mécanisme de transmission et/ou de travail principal (18) à entraîner par le dispositif d'entraînement (8) et/ou le couple du moteur hydraulique (12) peut être transmis à l'élément (5) à entraîner de l'ensemble de mécanisme de transmission et/ou de travail principal par le biais du moteur électrique (10).

7. Engin de travail selon l'une des deux revendications précédentes, dans lequel un train d'engrenages est prévu entre le moteur hydraulique (12) et le moteur électrique (10).

8. Engin de travail selon l'une des revendications précédentes, dans lequel un train d'engrenages (11) est prévu entre le moteur électrique (10) et l'élément (5) à entraîner par le train d'entraînement (9).

9. Engin de travail selon l'une des revendications précédentes, dans lequel le moteur électrique (10) possède un couple de démarrage maximal et/ou un couple d'entraînement maximal, qui est inférieur au couple de démarrage maximal requis et/ou au couple d'entraînement maximal requis par le dispositif d'entraînement (8), la somme des couples de démarrage et/ou couples d'entraînement maximaux du moteur électrique (10) et du moteur hydraulique (12) raccordé étant au moins égale audit couple de démarrage et/ou couple d'entraînement maximal requis du dispositif d'entraînement (8).

10. Engin de travail selon l'une des revendications précédentes, dans lequel l'engin de travail est réalisé sous la forme d'un tombereau (1) et le dispositif d'entraînement (8) est réalisé sous la forme d'un entraînement de roue destiné à entraîner au moins une roue (5) du châssis (4) du tombereau (1).

11. Engin de travail selon la revendication précédente, dans lequel le moteur hydraulique (12) peut être alimenté par une pompe d'un mécanisme de basculement (22) destiné au basculement d'une benne basculante (2) du tombereau (1).

12. Engin de travail selon l'une des revendications 1 à 9, dans lequel l'ensemble de travail principal est réalisé sous la forme d'un entraînement par tambour à câble, l'engin de travail étant réalisé de préférence sous la forme d'une grue ou d'un engin de levage et le tambour à câble étant prévu pour le réglage d'un câble de levage ou d'un câble de haubanage.

13. Procédé de fonctionnement d'un engin de travail, qui comporte un dispositif d'entraînement (8) équipé d'au moins un moteur électrique (10) et d'au moins un moteur hydraulique (12) d'assistance au moteur électrique (10) pour entraîner un ensemble de mécanisme de transmission et/ou de travail (18), le moteur hydraulique (12) pouvant être raccordé au moteur électrique (10) et découplé du moteur électrique (10) au moyen d'un accouplement (13), **caractérisé en ce que** le moteur hydraulique (12) est raccordé pour le démarrage de l'ensemble de mécanisme de transmission et/ou de travail et est découplé automatiquement par un dispositif de commande (14) lors du dépassement d'une vitesse de déplacement ou d'une vitesse de rotation prédéfinie de l'ensemble de travail.
